# EUROPEAN PATENT SPECIFICATION

(11) **EP 2 757 046 B1**
(45) Date of publication and mention of the grant of the patent: **11.03.2015**
(21) Application number: 13425010.9
(22) Date of filing: 17.01.2013
(51) Int. Cl.: B65B 29/08, B65D 81/32, B65B 9/04

(54) **Method for preparing a ready-to-eat food tray**
Verfahren zur Vorbereitung eine Schale für Fertignahrungsmittel
Methode de préparation d'une barquette de plat preparé

(43) Date of publication of application: 23.07.2014
(73) Proprietor: Barilla G. e R. Fratelli S.p.A., 43100 Parma (IT)
(72) Inventor: Amigoni, Michele, 43100 Parma (IT); Tedeschi, Giancarlo, 43100 Parma (IT); Bordini, Andrea, 43100 Parma (IT); Azzali, Pierluigi, 43100 Parma (IT)
(74) Representative: Ferreccio, Rinaldo

(56) References cited:
- EP-A1- 2 080 713
- EP-A1- 2 233 401
- JP-A- H11 222 269

## Description

### Field of application

The present invention refers to a method for preparing a ready-meal package, and in particular for preparing a package of the type that can be heated in a microwave oven, comprising at least two separate sterilised food products to be mixed prior to their consumption.

### Prior art

In order to meet the needs regarding limited availability of time for a large share of consumers, the industrial field in question produces and sells various types of food products ready for consumption, in most cases heatable in microwaves. Such products are usually referred to as "ready to heat" or "ready to eat" (depending on whether such ready meals require heating in a microwave).

Among the various types of ready meals, some comprise two separate food components to be mixed before consumption. Generally, one of such components has a liquid or semi-liquid consistency and it serves as a condiment for the other. The two components, for example, can be made up of pasta and a sauce to be mixed therewith or by cereals and condiment cream for the former.

Ready-meals packages of the aforementioned type in some cases comprise a single tray divided into two compartments, intended for the two separate components, and covered with a covering film.

A package of this type allows sterilising the food products after packaging. As a matter of fact, the physical separation of the two components prevents the passage of humidity towards the non-liquid part, preventing deterioration of its organoleptic properties.

However, in order to prevent the sterilisation from deteriorating the quality of food products, limiting the free volume present between the latter and the upper protection film, i.e. minimising the so-called "headspace", is of fundamental importance. This package need turns into a drawback of the described solution. As a matter of fact, in order to meet the headspace requirements, the two compartments of the tray are filled with the products to the brim, and there is absolutely no free space sufficient to mix the two components. Therefore, the consumer is forced to pour the two products into a separate plate, hence leading to unease due to the need of finding and washing such supplementary dishes.

Alternative package solutions, intended to solve the abovementioned problem, provide for the use of a tray, without compartments, into which the two components are premixed. However, in such case, the sterilisation performed on the non-separated products, risks prejudicing the quality of the food.

An alternative solution employs separate packets for the two components and a rigid container for mixing and consumption; however, the production and package costs in this case increase considerably.

The use of a main container equipped with a secondary container nested therein is envisaged by one last solution. One of the two food components thus fills the secondary container, while the other is introduced into the volume of the main container left free by the secondary container. The package can be filled completely so as to minimise the headspace, after which it is sealed by a covering film and sterilised in an autoclave. At the moment of consumption, the covering film is removed and the secondary container is extracted, providing an additional volume for the mixing of the components inside the main container. Such a package is shown, for example, in EP 2 080 713 A1.

This last solution, whilst substantially meeting the current requirements of the field, nevertheless has some drawbacks that are yet to be solved, mainly linked to the attachment of the covering film.

The attachment of the covering film is typically obtained by heat sealing, carried out by conduction through a heated sealing head that is lowered on top of the film, exerting a given pressure for a given dwell time.

The sealing thus carried out must of course ensure characteristics of sufficiently high strength and tightness, both in view of the sterilisation in an autoclave and of the subsequent conservation of the product. The high strength of the seal, however, substantially hinders the removal of the film by the end consumer; in particular, it is extremely difficult to separate the film from the upper mouth of the secondary container.

In order to remove the film, the consumer grips a flap thereof, applying a force upwards, while with the other hand he holds the main container. The possibility of applying two opposing actions makes it substantially easier to open the perimetric seal that engages the main container. The secondary container is not, however, integral with the main container, nor is it easily accessible to the consumer who wishes to exert a holding action against it. Such a container thus tends to be pulled during the lifting of the film, without or only partially detaching from the film itself. As a result there is an annoying obstacle to the complete opening of the package, as well as the risk of tipping out the content of the secondary container during the operation.

It should also be noted that to make a sufficiently resistant seal for the sterilisation requirements in an autoclave it is necessary to apply a relatively high sealing pressure, indicatively around 10 bar. The outer perimeter of the package can be made projecting outwards, so as to be supported by a suitable counter-mould during such sealing operations. However, it is not possible to use the same provision for the inner portions, i.e. those not peripheral with respect to the package, of the secondary container. At such portions, the pressure of the sealing head is thus discharged onto the plastic wall below, and risks to cause damage to it.

### Summary of the invention

Therefore, the technical problem on which the present invention is based is that of providing a method for preparing a sterilised ready-meal package, of the type comprising two containers nested inside one another for containing two food products sealed at the upper part by a single protective film, which allows the drawbacks of the prior art described above to be overcome.

The aforementioned technical problem is solved by a method for preparing a sterilised ready-meal package, comprising the steps of:
- providing a main container defining a main volume intended to accommodate a main food product, and having a first opening at the top part surrounded by a first planar edge;
- providing at least one secondary container defining a secondary volume and having a second opening at the top part surrounded by a second planar edge;
- introducing said secondary container inside the main container, so that said first edge and said second edge are flush;
- introducing at least one secondary food product inside the secondary volume;
- introducing at least one main food product inside the main volume;
- making, by means of a first sealing head facing the first edge, a perimetric seal between a covering film, arranged to cover said first and second opening, and said first edge;
- making, by means of a second sealing head facing the second edge and physically distinct from the first sealing head, an inner seal between the covering film and the second edge.

A man skilled in the art will understand how the separation of the sealing step, conventionally carried out by means of a single sealing head, advantageously makes it possible to separately modulate the characteristics of strength and tightness of the perimetric and outer seal.

The owner has, indeed, observed how the high characteristic of strength required for the outer seal is not strictly necessary at the inner one, subjected to lower mechanical stresses. Thus, it is possible to make an inner seal that is less resistant, solving the drawbacks described above with reference to the methods of the prior art, i.e. the difficulty of removing the covering film and the risk of damaging the structure of the package during sealing.

In making the perimetric seal, the first sealing head applies a first pressure above the covering film; in making the inner seal the second sealing head applies a second pressure above the covering film. Said first pressure is preferably greater than said second pressure, in order to make the two seals with differentiated strength according to the requirements outlined earlier.

In particular, the first pressure is preferably greater than 5 bar, even more preferably comprised between 8 and 10 bar; the second pressure, on the other hand, is preferably less than 5 bar, even more preferably comprised between 2 and 3 bar.

The first pressure can be applied for example by means of a mechanical actuator, provided, for example, to seal ten packages at a time with a force of 45 kN.

The second pressure can be applied for example by means of pneumatic actuators provided to act on six packages at a time, applying a pressure ranging between 2 and 3 bar.

Again in order to differentiate the inner seal from the perimetric seal, it is possible to apply two different dwell times for the two different sealing heads. In particular, the dwell time of the first sealing head in making the perimetric seal can be greater than the dwell time of the second sealing head in making the inner seal.

For example, the dwell time of the first sealing head can be greater than 0.8 s (for example equal to 1 s) and the dwell time of the second sealing head can be less than 0.8 s (for example equal to 0.6 s).

In making the perimetric and inner seals the temperatures of the first and second sealing head can be greater than a melting temperature of the covering film, so as to make a heat seal. In particular, a heat seal is made through the heating of the sealing heads, which promote a heating of the interface portion between the covering film and the upper edges of the containers.

The covering film can be at least partially made (at the interface with the containers) from plastic material, for example it can comprise at least one inner layer of polypropylene, and the temperatures of the first and second sealing head can be comprised between 180°C and 220°C. A slightly higher temperature can be selected for the first sealing head that makes the perimetric seal: such a head can for example be heated up to 200°C, whereas the second head is heated up to 195°C.

The first sealing head defines a first sealing profile, whereas the second sealing head defines a second sealing profile. Preferably, both of the sealing profiles are closed profiles.

Thanks to such a provision, the more resistant perimetric seal ensures the tightness of the package with respect to the outside, whereas the inner seal independently makes an inner seal for separating between the two foods, which in particular prevents migrations of humidity during a possible sterilisation in an autoclave.

In particular, the first sealing profile can follow said first edge, without involving the second edge; similarly, the second sealing profile will follow the peripheral path of the second edge.

The step of providing a main container can advantageously comprise a step of thermoforming the main container in polypropylene with co-extruded EVOH barrier; the step of providing the secondary container can, on the other hand, comprise a step of injection moulding the secondary container in polypropylene.

Said first edge can advantageously be made projecting outwards with respect to the ready-meal package, said step of making the perimetric seal involving the application of a counter-mould beneath said first edge.

This last provision makes it possible in particular to discharge the high sealing pressures applied by the first sealing head.

Said step of making the perimetric seal and said step of making the inner seal are preferably carried out at two distinct times; in particular, it is preferred to make the inner seal at a later time with respect to the perimetric seal.

The method according to the present invention can also comprise a step of sterilising the ready-meal package in an autoclave after the steps of making the perimetric seal and the inner seal.

The method according to the present invention can use one or more sealing stations to carry out the perimetric and inner seals. Such stations can in particular comprise at least one first sealing head and at least one second sealing head that are distinct from one another, respectively arranged to make said perimetric seal and said inner seal.

Preferably, there is a first sealing station equipped with the first sealing head and a second sealing station equipped with the second sealing head.

Further characteristics and advantages shall be clearer from the detailed description, outlined hereinafter, of some preferred but not exclusive embodiments of the present finding, with reference to the attached figures provided for exemplifying and non-limiting purposes.

### Brief description of the drawings

Figure 1 is a perspective view of a first variant of a package made with the method according to the present finding;
figure 2 is a perspective view of a main container and of a secondary container making up the package of figure 1 separated from each other;
figure 3 is a perspective view of a second variant of a package made with the method according to the present finding;
figure 4 is a perspective view of the package of figure 3 without its content and its covering film;
figure 5 is a view from above of a main container that makes up the package of figure 3;
figure 6 is a view from above of a secondary container that makes up the package of figure 3;
figure 7 is a perspective view of the package of figure 3, on which two sealing profiles relative to the method according to the present invention are highlighted;
figure 8 represents a flow-chart of the method for preparing a package according to the present invention;
figure 9 represents the packaging process for carrying out the preparation method according to the present invention.

### Detailed description

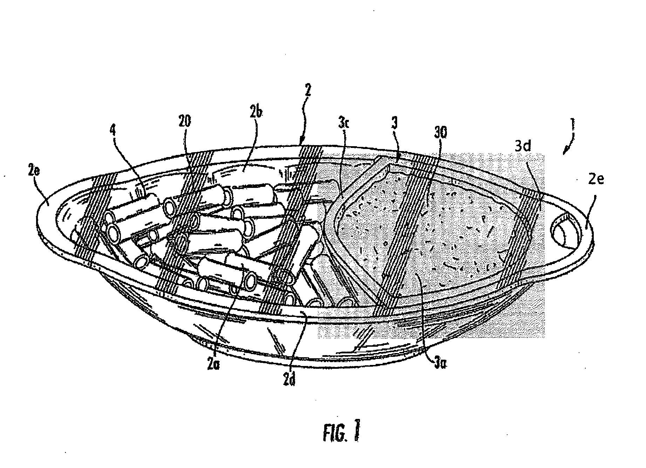

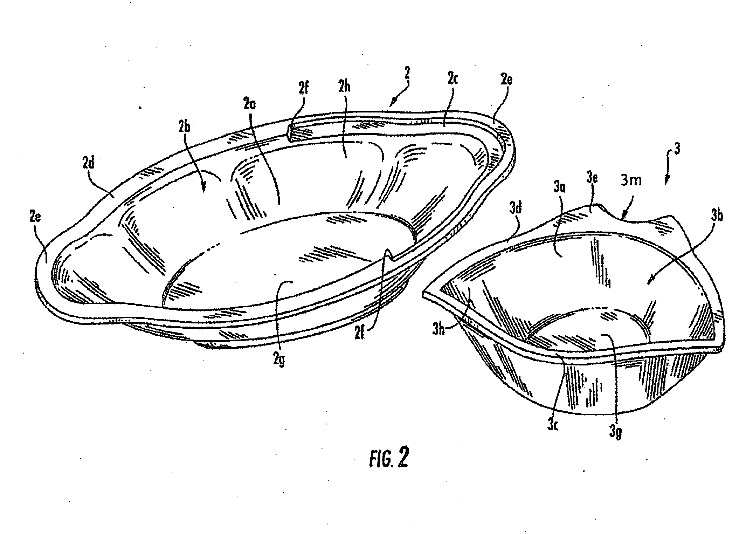

With reference to the attached figures 1-6, reference numerals 1 and 1' respectively identify a first and a second variant of a sterilised ready-meal package, both of which can be prepared with the method according to the present invention.

Preferably, the packages 1; 1' are of the type intended to be heated in a microwave.

Both of the packages 1; 1' comprise: a main container 2; 2', defining a main volume 2a; 2a' and having a first opening 2b; 2b' in the upper part; a main food product 20 (not visible in the representations relating to the second variant) contained inside at least part of said main volume 2a; 2a'; at least one secondary container 3; 3', defining a secondary volume 3a; 3a' and having a second opening 3b; 3b' in the upper part; at least one secondary food product 30; 30', contained inside at least part of said secondary volume 3a; 3a'; a removable covering film 4; 4' arranged to occlude said first opening 2b; 2b' and second opening 3b; 3b'.

The main food product can for example consist of pasta, rice or other cereals; the secondary food product 30; 30', again as an example, can be a sauce, a vegetable cream or other similar condiments. Such a secondary food product 30; 30' preferably has a liquid or semiliquid consistency. On the other hand, alternative embodiments of the present invention may provide for a main food product of the liquid type with a secondary food product 30; 30' having a solid consistency, or both products may be liquid or solid.

The main and secondary food products, for the reasons linked to minimising the headspace outlined above, preferably occupy at least 80% of the available free volume.

In the present description, the term free volume is used to indicate the volume inside the container available to be occupied by a product, delimited at the upper part by a plane lying on the opening before sterilisation.

The secondary container 3; 3' is associated in a removable manner inside the main container 2; 2', in such a manner to occupy part of the main volume 2a; 2a' and reduce the free volume available for the main food product to a portion of said main volume 2a; 2a'.

In particular, the secondary container 3; 3' preferably occupies a lateral portion of the main container 2; 2'.

The main container 2; 2' and the secondary container 3; 3' respectively comprise a first bottom wall 2g; 2g' and a second bottom wall 3g; 3g'. Such walls 2g; 2g', 3g; 3g' are preferably planar in such a manner to serve as support bases for the two containers 2; 2', 3; 3'. Preferably, the second bottom wall 3g; 3g' rests on the first bottom wall 2g; 2g' when the second container 3; 3' is associated with the first container 2; 2'. In both of the variants represented here, the first bottom wall 2g; 2g' has an elliptical contour, whereas the second bottom wall 3g; 3g' defines an ellipse portion.

The main container 2; 2' comprises a first edge 2d; 2d' developing along the periphery of the first opening 2b; 2b' and the secondary container 3; 3' comprises a second edge 3d; 3d' developing along the periphery of the second opening 3b; 3b'. When the package 1; 1' is closed, the first and the second edge 2d; 2d', 3d; 3d' are coplanar and in direct contact with the covering film 4; 4', which is integrally associated with both.

The covering film 4; 4', made from plastic material, thus entirely covers the upper portion of the package 1; 1'. It can be transparent, as illustrated with reference to the first variant, or opaque, as illustrated with reference to the second variant. In this last case, it is worth noting the presence of a transparent window 4a' for visual access to the secondary food product 30',

The edges 2d; 2d', 3d; 3d' are joined to the respective bottom walls 2g; 2g', 3g; 3g' by means of respective side walls 2h; 2h', 3h; 3h'. The side walls 2h; 2h', 3h; 3h' have a concavity facing upwards; only in the second variant do such walls 2h', 3h' also have substantially flat sections at the vertices of the ellipse, in any case equipped with a slight inclination with respect to the vertical in order to ease the insertion of the second container 3' inside the first 2'. The edges 2d; 2d', 3d; 3d' develop externally projecting with respect to the rest of the containers to which they belong, and in particular projecting with respect to the side walls 2h; 2h', 3h; 3h'.

In order to constrain the position of the secondary container 3; 3' with respect to the main container 2; 2' holding it, such secondary container 3; 3' is accommodated in a shape-coupled manner inside the main container 2; 2' in a predefined zone of the latter.

The first edge 2d; 2d' of the main container 2; 2' of the package 1; 1' bears, for the purpose, a groove 2c; 2c' at such predefined zone of the main container 2; 2', intended to accommodate the secondary container 3; 3' and maintain it at a predefined position. The groove 2c, which develops internally along the first edge 2d; 2d', accommodates and supports the outer portion of at least part of the second edge 3d; 3d' in such a manner that the first and the second edge 2d; 2d', 3d; 3d' are coplanar as described above. The groove 2c; 2c' advantageously has two vertical abutment surfaces 2f; 2f which prevent the secondary container 3; 3' from sliding towards the centre of the main container 2; 2'.

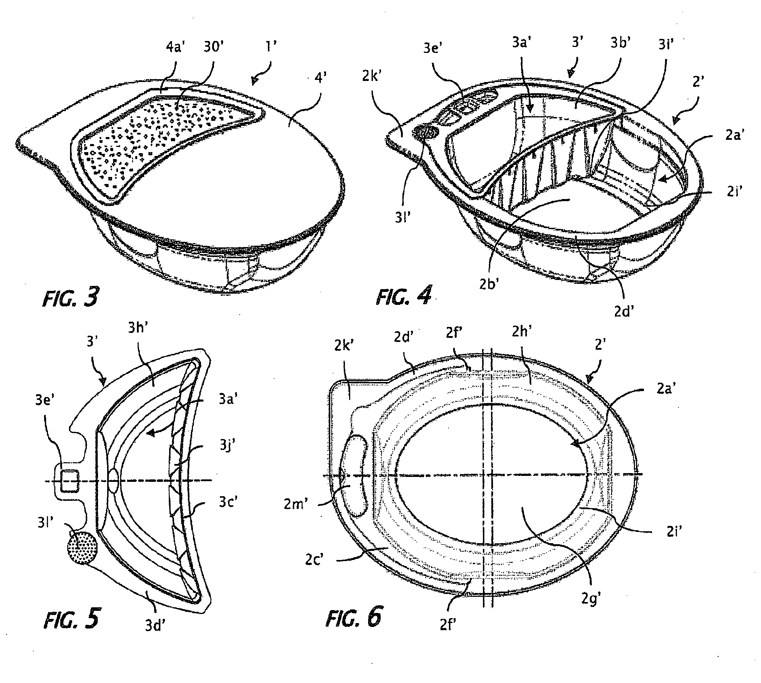

In the second variant illustrated in figures 3-6, the package also comprises, again in order to define a unique mutual coupling between the two containers 2', 3', a peripheral channel 2i' that surrounds the elliptical bottom wall 2g' of the main container 2'. Such a channel is intended to accommodate a corresponding protrusion 3i' projecting below the bottom wall of the secondary container 3'.

Alternative embodiments may provide for alternative solutions to prevent the relative sliding between the two nested containers.

In the first variant embodiment, the secondary container 3 has, on the periphery of the second opening 3a, a spout 3c adapted to facilitate the pouring of the secondary food product 30 into the main container 2. The spout 3c is defined in particular by a concave trend towards the inside of the inner peripheral profile of the second opening 3b.

Such a feature is not replicated in the second variant, where, instead, the corresponding inner peripheral profile 3c' of the second opening 3b' has concavity facing outwards. Such a provision allows greater structural rigidity of the element, subject to high sealing pressures during the application of the covering film 4'.

Again with reference to the second variant, it should be noted that, under said inner peripheral profile 3c', the side wall 3h' of the secondary container 3' is substantially vertical and has a plurality of stiffening ribs 3j', also vertical. Such a feature contributes to discharging the sealing pressures applied on top of the secondary container 3'.

In both of the variant embodiments, the second edge 3d; 3d' comprises, preferably opposite the inner peripheral profile, a holding strip 3e; 3e', that extends projecting with respect to the adjacent portion of second edge 3d; 3d'. The holding strip 3e; 3e' facilitates grasping the secondary container 3; 3', providing in particular a holding point far from the secondary food product when it reaches a temperature such as to prevent its direct manipulation.

In particular, the holding strip 3e; 3e' is at least partially accommodated in the groove 2c; 2c'.

In the first variant, the accommodated portion of the strip 3e has a peripheral profile which has a recess slope 3m. Such peripheral profile, when the two containers are associated, is adjacent to a side surface of the groove 2c and it is far from the latter right at the recess slope 3m. Such recess has a shape and size adapted to allow the introduction of a finger of a consumer between the peripheral profile and the side surface of the groove 2c, so as to allow the strip 3e to be easily gripped.

In the second variant, again in order to facilitate grasping the strip 3e', the groove 2c' has an impression 2m', that allows the introduction of a finger around and below the strip 3e'. The strip 3e' has a rectangular shape with a central hole to facilitate its grasping.

In the first variant, the main container 2 has a longitudinal extension and comprises, at its opposite ends, two shaped projections 2e adapted to facilitate its holding. The groove 2c, which defines the position of the secondary container 3, is advantageously arranged at one of such shaped projections 2e; hence, the abutment surfaces 2f are transverse to the development of the main container.

In the second variant, the main container 2' has a substantially elliptical profile with the exception of a triangular ear 2k', arranged in an intermediate point between two successive vertices of the profile; in particular, such a point is arranged along the portion of the main container 2' that accommodates the secondary container 3'.

The triangular ear 2k' advantageously acts as a gripping flap for the covering film 4' during the opening of the package 1'. Given its position, it promotes a removal of the covering film 4' according to a diagonal that is oblique with respect to the axes of the package 1', so as to have an opening front that is misaligned with respect to the inner peripheral profile 3c' requiring less effort from the consumer engaged in removing the film.

Again to promote the opening operations, in the second variant the second edge 3d' comprises, at the triangular ear 2k', a rough portion 31' (defined in this case by a dimpled disc) intended to facilitate the first detachment of the covering film 4' with respect to the secondary package 3'.

The materials used to make the main container 2; 2', the secondary container 3; 3' and the covering film 4; 4' are preferably all specifically intended to be inserted in an operating microwave oven, without deteriorating the organoleptic quality of the food products that they contain. In particular, they are preferably made with plastics suitable for use in microwave ovens.

In particular, the main container 2; 2' is preferably made from polypropylene thermoformed with co-extruded EVOH barrier, just as the covering film 4; 4' is preferably a PP/EVOH/PP barrier film. The secondary container 3; 3', on the other hand, is preferably made from polypropylene by injection moulding, a process that allows greater accuracy necessary for example to make the ribs 3j' of the second variant.

In order to highlight the ease of use of the packages 1; 1' described above by an end consumer, let us examine the operations that he performs at the moment of consumption.

Firstly, if needed, he takes care of heating or cooking the content of the package 1; 1', preferably in a microwave oven. Preliminarily, according to the type of food products present, he may or may not remove or perforate the covering means 4; 4'; moreover, may be required to add water inside the main volume 2a; 2a' or the secondary volume 3a; 3a'.

If the secondary volume 3a; 3a' contains a product with liquid consistency like a sauce, the covering means 4; 4' will preferably be partially removed so as to allow steam to escape just from the second opening 3b; 3b'.

Once the package 1; 1' has been heated, or even prior to introduction into the oven, the consumer carries out the mixing of the two food products. In this step, he introduces a finger at the recess slope 3m or the impression 2m', he grips the holding strip 3e; 3e' and extracts the secondary container 3; 3' from the main container 2; 2'. Consequently, the main food product distributes in the entire main volume 2a; 2a', now completely available. At this point, by inclining the secondary container 3; 3', the consumer pours (possibly through the spout 3c) the secondary food product 30; 30' inside such a main volume 2a; 2a', where he can easily mix and consume the prepared food.

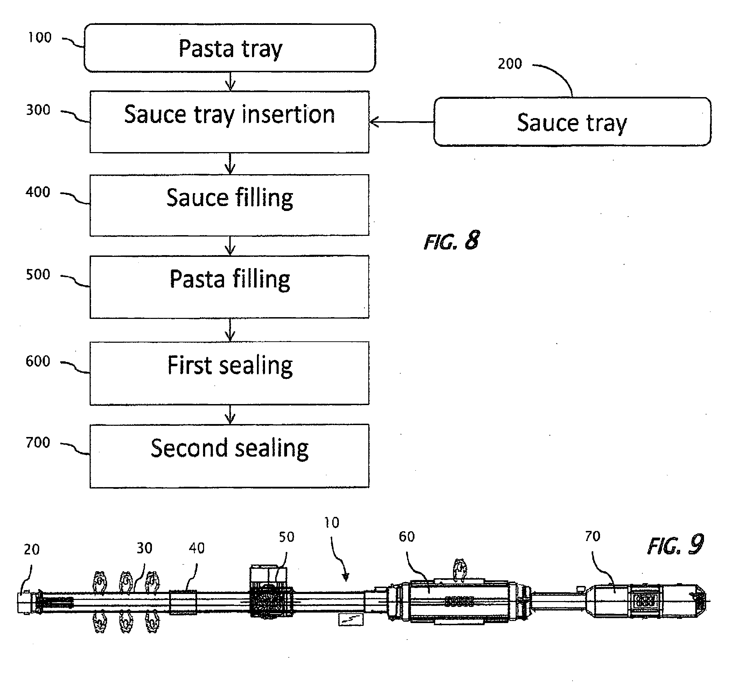

With reference to figure 8, let us now pass to describing the preparation method according to the present invention, which makes it possible to make a sterilised ready-meal package 1; 1' according to one of the variants described earlier purely as an example.

In order to make the subsequent steps of the method more intelligible, they are illustrated hereafter with reference to an example packaging line 910, of the type depicted in figure 9.

The method preliminarily carries out a step of making 100 the main container 2; 2' and a step 200 of making the secondary container 3; 3'. As stated earlier, the main container 2; 2' is preferably made by thermoforming in polypropylene with EVOH barrier, whereas the secondary container 3; 3' is preferably made by injection moulding again from polypropylene.

At an end upstream of the packaging line 910 there is a feeding station 920 for the main containers 2; 2', which are directed on a linear conveyor belt towards the successive processing stations.

Downstream of the feeding station 920 there is an introduction station 930 of the secondary container 3; 3', at which an introduction step 300 of the secondary container 3; 3' inside the main container 2; 2' directed on the conveyor belt is carried out.

Such an introduction step 300 can be carried out manually by special workers, as illustrated in the attached figure 9; alternatively, there can be automatic positioning means of the secondary container 3; 3' in the main container 2; 2'.

The secondary container 3; 3' is introduced in its correct nested position inside the main container 2; 2', as described earlier with reference to the packages 1; 1'. In particular it should be noted that the secondary container 3; 3' is preferably introduced into a side portion of the main volume 2a; 2a', and moreover the first edge 2d; 2d' and the second edge 3d; 3d' are flush.

The two assembled containers 2; 2', 3; 3' are then conveyed to a subsequent first filling station 940, at which a step of introducing 400 at least one secondary food product 30; 30' inside the secondary volume 3a; 3a' is carried out.

The secondary food product 30; 30', as discussed earlier, is preferably represented by a sauce or other food with liquid or semi-liquid consistency, so that the first filling station 940 can advantageously comprise a dispensing nozzle for delivering such a product.

In this step, the secondary food product 30; 30' is introduced in a quantity such as to occupy at least 80% of the secondary volume 3a; 3a' available; in general, the headspace is preferably reduced as much as possible in view of the subsequent sterilisation in an autoclave.

Once the secondary container 3, 3' has been filled, the assembled containers 2; 2', 3; 3' are conveyed to a second filling station 950, at which a step of introducing 500 at least one main food product inside the main volume 2a; 2a' is carried out.

The main food product, as discussed earlier, is preferably represented by a pasta or other food with solid consistency, so that the first filling station 950 can advantageously comprise a gravity dispenser or a robotic head for delivering such a product.

In this step, the secondary food product 30; 30' is introduced in a quantity such as to occupy at least 80% of the free volume left available in the main container 2; 2' after the introduction of the secondary container 3; 3'; in general, the headspace is preferably reduced as much as possible in view of the subsequent sterilisation in an autoclave.

Once the filling is complete, the package 1; 1' is conveyed to a first sealing station 960 for the application of the covering film 4; 4'.

The first sealing station 960 comprises a first sealing head by means of which a step of making 600 a perimetric seal between the covering film 4; 4' and the first edge 2d; 2d' of the package 1; 1' is carried out.

It should be noted that, to carry out the perimetric seal, the covering film 4; 4' must be arranged to cover said first and second opening 2b; 2b', 3b; 3b'. Such an operation can be carried out preliminarily to the operation of the first sealing head or simultaneously with it; the same cutting to size of the covering film 4; 4' above the upper perimeter of the package 1; 1' can be carried out in conjunction with the lowering of the first sealing head.

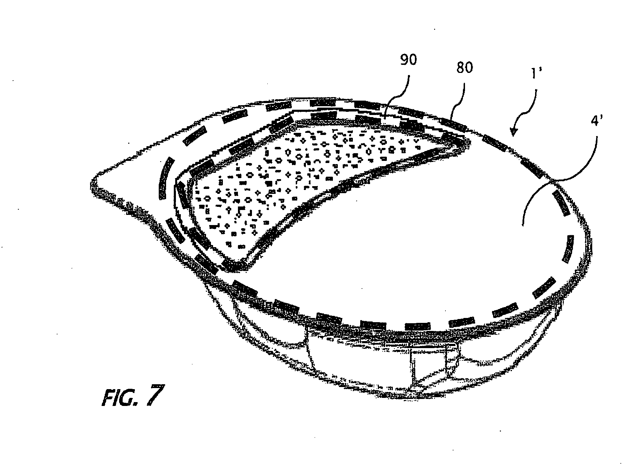

The perimetric seal follows a first closed sealing profile 80, visible in figure 7, which engages just the first edge 2d; 2d' of the package 1; 1', In other words, the first sealing head does not press on any part of the secondary container 3; 3' while the perimetric seal is being carried out. The perimetric seal follows the outer perimeter of the package to be covered; in the variants of package 1; 1' exemplified in the present description, it has in particular a first sealing profile 80 that is substantially elliptical.

The perimetric seal is a heat seal made at the interface between the plastic material of the first edge 2d; 2d' and a plastic material that defines the most inner layer of the covering film 4; 4', which can for example be made from polypropylene.

The heat sealing is carried out by conduction through the heating of the first sealing head, which lies above the covering film 4; 4'. It should be noted that a suitable counter-mould can be envisaged beneath the first edge 2d, 2d' during the sealing operation to discharge the high pressures applied.

In a preferred embodiment of the method, in carrying out the perimetric seal the first sealing head, heated to a first temperature θ₁ equal to 200°C, applies a force equal to about 45 kN for a dwell time T₁ equal to 1s. In particular, the force of 45 kN is transmitted by means of a mechanical actuator, and is distributed over ten packages that are simultaneously sealed at the first sealing station 960. Given a contact area of the first sealing profile 80 that can be estimated at about 50 cm² for each package, the first sealing pressure P₁ resulting is about 9 bar.

The values proposed above, although purely examples, ensure a high strength of the perimetric seal compatible with the subsequent sterilisation operations in an autoclave.

Once the perimetric seal is completed, the package 1; 1' is conveyed to a second sealing station 970.

The second sealing station 970 comprises a second sealing head by means of which a step of making 700 an inner seal between the covering film 4; 4' and the second edge 3d; 3d' of the package 1; 1' is carried out.

The inner seal follows a second closed sealing profile 90, visible in figure 7, which engages just the second edge 3d; 3d' of the secondary container 3; 3'. The inner seal follows the outer perimeter of the secondary container 3; 3'; in the variants of package 1; 1' exemplified in the present description, it has in particular a second sealing profile 90 that encloses an ellipse portion. It should be noted that the second sealing profile 90 completely separates the secondary food product 30; 30' with respect to the main food product 20.

The perimetric seal is a heat seal made at the interface between the two plastic materials of the second edge 3d; 3d' and of the inner layer of the covering film 4; 4'. The heat seal is made by conduction through the heating of the second sealing head, which lies over the covering film 4; 4'. It should be noted that, in the second variant of the package 1', the pressures applied during the sealing can be discharged onto the stiffening ribs 3j'.

In a preferred embodiment of the method, in carrying out the inner seal the second sealing head, heated to a second temperature θ₂ equal to 195°C, applies a second pressure P₂ equal to 2.5 bar for a dwell time T₂ equal to 0.6 s.

The second sealing station 970 comprises in particular pressure-controlled pneumatic actuators provided to carry out the inner seal on six packages at a time.

The values proposed above, although purely examples, ensure a sufficient seal of the inner seal to avoid migrations of vapour between the inner compartments during the subsequent sterilisation operations in an autoclave.

Moreover, the method comprises a step of sterilising the ready-meal package 1; 1' coming out from the packaging line 910 in an autoclave. The sterilisation, as discussed earlier, makes the reduction of headspace essential in the preparation of the package 1; 1'.

The covering film 4; 4' upperly delimits the entire free volume available for the food products contained in the containers. In practice, by occupying at least 80%, preferably 90% of the free volume of the two containers, there remains a headspace comprised between the upper level of the food product and the covering film 4; 4' of no more than 10-20% of such free volume.

An advantage of the invention is the extreme ease of opening of the package carried out with the method described above.

Another advantage derives from the excellent characteristics of strength and tightness relative to the outer perimeter of the package.

Another advantage of the invention is the simplicity and the low manufacturing costs of the package.

Another advantage of the invention derives from the easy manipulation of the elements that make up the package during the steps of introduction into the microwave oven of the finding and of mixing the food products that it comprises.

A further advantage of the invention concerns the possibility of heating the package according to the finding in a microwave oven without deterioration of the organoleptic qualities of the food products that make it up.

Obviously, the aforedescribed finding may be subjected to numerous modifications and variants - by a man skilled in the art with the aim of meeting the possible and specific requirements - all falling within the scope of protection of the invention as defined by the following claims.

## Claims

1. Method for preparing a sterilised ready-meal package (1; 1'), comprising the steps of:
- providing (100) a main container (2; 2') defining a main volume (2a; 2a') intended to accommodate a main food product (20), and having a first opening (2b; 2b') at the upper part surrounded by a first planar edge (2d; 2d');
- providing (200) at least one secondary container (3; 3') defining a secondary volume (3a; 3a') and having a second opening (3b; 3b') at the upper part surrounded by a second planar edge (3d; 3d');
- introducing (300) said secondary container (3; 3') inside the main container (2; 2'), so that said first edge (2d; 2d') and said second edge (3d; 3d') are flush;
- introducing (400) at least one secondary food product (30; 30') inside the secondary volume (3a; 3a');
- introducing (500) at least one main food product (20; 20') inside the main volume (2a; 2a');
- making (600), by means of a first sealing head facing the first edge (2d; 2d'), a perimetric seal between a covering film (4; 4'), arranged to cover said first and second opening (2b; 2b', 3b; 3b'), and said first edge (2d; 2d');
- making (700), by means of a second sealing head facing the second edge (3d; 3d') and physically distinct from the first sealing head, an inner seal between the covering film (4; 4') and the second edge (3d; 3d').

2. Method according to claim 1 wherein: in making (600) the perimetric seal, the first sealing head applies a first pressure (P₁) above the covering film (4); in making (700) the inner seal the second sealing head applies a second pressure (P₂) above the covering film (4); said first pressure (P1) being greater than said second pressure (P₂).

3. Method according to claim 2, wherein said second pressure (P₂) is less than 5 bar.

4. Method according to one of claims 2 or 3, wherein said first pressure (P₁) is more than 5 bar.

5. Method according to one of the previous claims, wherein: the dwell time (T1) of the first sealing head in making (600) the perimetric seal is longer than the dwell time (T₂) of the second sealing head in making the inner seal (700).

6. Method according to claim 5, wherein the dwell time (T₁) of the first sealing head is more than 0.8 s and the dwell time (T₂) of the second sealing head is less than 0.8 s.

7. Method according to one of the previous claims, wherein in making (600, 700) the perimetric and inner seals the temperatures (θ₁, θ₁) of the first and second sealing head are above a melting temperature of the covering film (4; 4'), so as to make a heat sealing.

8. Method according to claim 7, wherein said covering film (4; 4') is made from plastic material and said temperature (θ₁, θ₁) of the first and second sealing head are comprised between 180°C and 220°C.

9. Method according to one of the previous claims, wherein the first sealing head defines a first sealing profile (80) and the second sealing head defines a second sealing profile (90), both of the sealing profiles (80, 90) being closed profiles.

10. Method according to claim 9, wherein said first sealing profile (80) follows said first edge (2d; 2d') without involving the second edge (3d; 3d').

11. Method according to one of the previous claims, wherein said step of providing (100) a main container (2; 21 comprises a step of thermoforming the main container (2; 2') in polypropylene with co-extruded EVOH barrier.

12. Method according to one of the previous claims, wherein said first edge (2d; 2d') is made projecting towards the outside with respect to the ready-meal package (1; 1'), said step of making (600) the perimetric seal involving the application of a counter-mould beneath said first edge (2d; 2d').

13. Method according to one of the previous claims, wherein said step of making (600) the perimetric seal and said step of making (700) the inner seal are made at two distinct times.

14. Method according to one of the previous claims, also comprising a step of sterilising the ready-meal package (1; 1') in an autoclave after the steps of making (600, 700) the perimetric seal and the inner seal.

15. Method according to one of the previous claims, wherein said steps of making a perimetric and inner seal are carried out by means of one or more sealing stations (960, 970) that comprise at least one first sealing head and at least one second sealing head that are distinct from one another, respectively arranged to make said perimetric seal and said inner seal.

## Patentansprüche

1. Verfahren zur Herstellung einer sterilisierten Fertiggericht-Verpackung (1; 1') umfassend die Schritte:
- Bereitstellen (100) eines Hauptbehältnisses (2; 2'), das ein Hauptvolumen (2a; 2a') definiert, das bestimmt ist zur Unterbringung eines Haupt-Nahrungsmittelerzeugnisses (20), und das eine erste Öffnung (2b; 2b') an dem oberen Teil, der von einem ersten planaren Rand (2d; 2d') umgeben ist, aufweist;
- Bereitstellen (200) zumindest eines sekundären Behältnisses (3; 3'), das ein sekundäres Volumen (3a; 3a') definiert und das eine zweite Öffnung (3b; 3b') an dem oberen Teil aufweist, das von einem zweiten planaren Rand (3d; 3d') umgeben ist;
- Einführen (300) des sekundären Behältnisses (3; 3') in das Hauptbehältnis (2; 2'), so dass der erste Rand (2d; 2d') und der zweite Rand (3d; 3d') bündig sind;
- Einführen (400) zumindest eines sekundären Nahrungsmittelerzeugnisses (30; 30') in das sekundäre Volumen (3a; 3a');
- Einführen (500) zumindest eines Haupt-Nahrungsmittelerzeugnisses (20; 20') in das Hauptvolumen (2a; 2a');
- Herstellen (600) einer perimetrischen Abdichtung zwischen einem Deckfilm (4; 4'), der angeordnet ist, um die erste und die zweite Öffnung (2b; 2b', 3b; 3b') zu bedecken, und dem ersten Rand (2d; 2d') mittels eines ersten Abdichtkopfes, der dem ersten Rand (2d; 2d') zugewandt ist;
- Herstellen (700) einer inneren Abdichtung zwischen dem Deckfilm (4; 4') und dem zweiten Rand (3d; 3d') mittels eines zweiten Abdichtkopfes, der dem zweiten Rand (3d; 3d') zugewandt ist und sich physisch vom ersten Abdichtkopf unterscheidet.

2. Verfahren nach Anspruch 1, wobei:
beim Herstellen (600) der perimetrischen Abdichtung der erste Abdichtkopf einen ersten Druck (P₁) über dem Deckfilm (4) anbringt; beim Herstellen (700) der inneren Abdichtung der zweite Abdichtkopf einen zweiten Druck (P₂) über dem Deckfilm (4) anbringt; wobei der erste Druck (P₁) größer ist als der zweite Druck (P₂).

3. Verfahren nach Anspruch 2,
wobei der zweite Druck (P₂) weniger als 5 bar beträgt.

4. Verfahren nach einem der Ansprüche 2 oder 3,
wobei der erste Druck (P₁) mehr als 5 bar beträgt.

5. Verfahren nach einem der vorangegangenen Ansprüche, wobei:
die Haltezeit (T₁) des ersten Abdichtkopfes beim Herstellen (600) der perimetrischen Abdichtung länger ist als die Haltezeit (T₂) des zweiten Abdichtkopfes beim Herstellen (700) der inneren Abdichtung.

6. Verfahren nach Anspruch 5,
wobei die Haltezeit (T₁) des ersten Abdichtkopfes länger als 0,8 s ist und die Haltezeit (T₂) des zweiten Abdichtkopfs kürzer als 0,8 s ist.

7. Verfahren nach einem der vorangegangenen Ansprüche,
wobei beim Herstellen (600, 700) der perimetrischen und inneren Abdichtung die Temperaturen (θ₁, θ₁) des ersten und zweiten Abdichtkopfes über der Schmelztemperatur des Deckfilms (4; 4') liegt, um eine Hitze-Abdichtung herzustellen.

8. Verfahren nach Anspruch 7,
wobei der Deckfilm (4; 4') aus einem Plastikmaterial hergestellt ist und die Temperatur (θ₁, θ₁) des ersten und zweiten Abdichtkopfes zwischen 180°C und 220°C liegen.

9. Verfahren nach einem der vorangegangenen Ansprüche,
wobei der erste Abdichtkopf ein erstes Abdichtprofil (80) definiert und der zweite Abdichtkopf ein zweites Abdichtprofil (90) definiert, wobei beide der Abdichtprofile (80, 90) geschlossene Profile sind.

10. Verfahren nach Anspruch 9,
wobei das erste Abdichtprofil (80) dem ersten Rand (2d; 2d') folgt, ohne den zweiten Rand (3d; 3d') einzubeziehen.

11. Verfahren nach einem der vorangegangenen Ansprüche,
wobei der Schritt des Bereitstellens (100) eines Hauptbehältnisses (2; 2') einen Schritt zum Thermoformen des Hauptbehältnisses (2; 2') aus Polypropylen mit einer co-extrudierten EVOH-Barriere umfasst.

12. Verfahren nach einem der vorangegangenen Ansprüche,
wobei der erste Rand (2d; 2d') auskragend in Richtung der Außenseite in Bezug auf die Fertiggericht-Verpackung (1; 1') hergestellt ist, wobei der Schritt des Herstellens (600) der perimetrischen Abdichtung die Anbringung einer Gegenform unterhalb des ersten Randes (2d; 2d') beinhaltet.

13. Verfahren nach einem der vorangegangenen Ansprüche,
wobei der Schritt des Herstellens (600) der perimetrischen Abdichtung und der Schritt des Herstellens (700) der inneren Abdichtung zu zwei verschiedenen Zeiten durchgeführt werden.

14. Verfahren nach einem der vorangegangenen Ansprüche,
auch umfassend einen Schritt zur Sterilisierung der Fertiggericht-Verpackung (1; 1') in einem Druckkessel nach den Schritten des Herstellens (600, 700) der perimetrischen Abdichtung und der inneren Abdichtung.

15. Verfahren nach einem der vorhergegangenen Ansprüche,
wobei die Schritte des Herstellens einer perimetr-ischen und inneren Abdichtung ausgeführt werden mittels einer oder mehrerer Abdichtstationen (960, 970), die zumindest einen ersten Abdichtkopf und zumindest einen zweiten Abdichtkopf, die verschieden voneinander sind, umfassen, die jeweils angeordnet sind, um die perimetrische Abdichtung und die innere Abdichtung herzustellen.

## Revendications

1. Procédé pour préparer un paquet repas cuisiné stérilisé (1 ; 1'), comprenant les étapes :
- de fourniture (100) d'un contenant principal (2 ; 2') définissant un volume principal (2a ; 2a') destiné à recevoir un produit alimentaire principal (20), et comportant une première ouverture (2b ; 2b') située dans la partie supérieure et entourée par un premier bord plan (2d ; 2d') ;
- de fourniture (200) d'au moins un contenant secondaire (3 ; 3') définissant un volume secondaire (3a ; 3a') et comportant une deuxième ouverture (3b ; 3b') située au niveau de la partie supérieure et entourée par un deuxième bord plan (3d ; 3d') ;
- d'introduction (300) dudit contenant secondaire (3 ; 3') à l'intérieur du contenant principal (2 ; 2'), de sorte que ledit premier bord (2d ; 2d') et ledit deuxième bord (3d ; 3d') soient au même niveau ;
- d'introduction (400) d'au moins un produit alimentaire secondaire (30 ; 30') à l'intérieur du volume secondaire (3a ; 3a') ;
- d'introduction (500) d'au moins un produit alimentaire principal (20 ; 20') à l'intérieur du volume principal (2a ; 2a') ;
- de réalisation (600), au moyen d'une première tête de scellage faisant face au premier bord (2d ; 2d'), d'un joint périmétrique entre un film de recouvrement (4 ; 4'), agencé pour recouvrir lesdites première et deuxième ouvertures (2b ; 2b', 3b ; 3b'), et ledit premier bord (2d ; 2d') ;
- de réalisation (700), au moyen d'une deuxième tête de scellage faisant face au deuxième bord (3d ; 3d') et physiquement distincte de la première tête de scellage, d'un joint intérieur entre le film de recouvrement (4 ; 4') et le deuxième bord (3d ; 3d').

2. Procédé selon la revendication 1 dans lequel : lors de la réalisation (600) du joint périmétrique, la première tête de scellage applique une première pression (P₁) au-dessus du film de recouvrement (4) ; lors de la réalisation (700) du joint intérieur, la deuxième tête de scellage applique une deuxième pression (P₂) au-dessus du film de recouvrement (4) ; ladite première pression (P₁) étant supérieure à ladite deuxième pression (P₂).

3. Procédé selon la revendication 2, dans lequel ladite deuxième pression (P₂) est inférieure à 5 bars.

4. Procédé selon l'une des revendications 2 ou 3, dans lequel ladite première pression (P₁) est supérieure à 5 bars.

5. Procédé selon l'une des revendications précédentes, dans lequel : le temps de maintien (T₁) de la première tête de scellage lors de la réalisation (600) du joint périmétrique est plus long que le temps de maintien (T₂) de la deuxième tête de scellage lors de la réalisation du joint intérieur (700).

6. Procédé selon la revendication 5, dans lequel le temps de maintien (T₁) de la première tête de scellage est supérieur à 0,8 s et le temps de maintien (T₂) de la deuxième tête de scellage est inférieur à 0,8 s.

7. Procédé selon l'une des revendications précédentes, dans lequel, lors de la réalisation (600, 700) des joints périmétrique et intérieur, les températures (θ₁, θ₁) des première et deuxième têtes de scellage sont supérieures à une température de fusion du film de recouvrement (4 ; 4'), de manière à réaliser un scellage thermique.

8. Procédé selon la revendication 7, dans lequel ledit film de recouvrement (4 ; 4') est réalisé à partir d'une matière plastique et ladite température (θ₁, θ₁) des première et deuxième têtes de scellage est comprise entre 180 °C et 220 °C.

9. Procédé selon l'une des revendications précédentes, dans lequel la première tête de scellage définit un premier profil de scellage (80) et la deuxième tête de scellage définit un deuxième profil de scellage (90), les deux profils de scellage (80, 90) étant des profils fermés.

10. Procédé selon la revendication 9, dans lequel ledit premier profil de scellage (80) suit ledit premier bord (2d ; 2d') sans inclure le deuxième bord (3d ; 3d').

11. Procédé selon l'une des revendications précédentes, dans lequel ladite étape de fourniture (100) d'un contenant principal (2 ; 2') comprend une étape de thermoformage du contenant principal (2 ; 2') en polypropylène avec une barrière d'EVOH coextrudée.

12. Procédé selon l'une des revendications précédentes, dans lequel ledit premier bord (2d ; 2d') est réalisé de manière à faire saillie à l'extérieur par rapport au paquet repas cuisiné (1 ; 1'), ladite étape de réalisation (600) du joint périmétrique impliquant l'application d'un contre-moule au-dessous dudit premier bord (2d ; 2d').

13. Procédé selon l'une des revendications précédentes, dans lequel ladite étape de réalisation (600) du joint périmétrique et ladite étape de réalisation (700) du joint intérieur sont effectuées à deux instants distincts.

14. Procédé selon l'une des revendications précédentes, comprenant également une étape de stérilisation du paquet repas cuisiné (1 ; 1') dans un autoclave après les étapes de réalisation (600, 700) du joint périmétrique et du joint intérieur.

15. Procédé selon l'une des revendications précédentes, dans lequel lesdites étapes de réalisation d'un joint périmétrique et d'un joint intérieur sont effectuées au moyen d'un ou de plusieurs postes de scellage (960, 970) qui comprennent au moins une première tête de scellage et au moins une deuxième tête de scellage qui sont distinctes l'une de l'autre, respectivement agencées pour réaliser ledit joint périmétrique et ledit joint intérieur.
